# EUROPÄISCHE PATENTSCHRIFT

(11) **EP 2 848 912 B1**
(45) Veröffentlichungstag und Bekanntmachung des Hinweises auf die Patenterteilung: **20.01.2016**
(21) Anmeldenummer: 14184566.9
(22) Anmeldetag: 12.09.2014
(51) Int. Cl.: G01M 15/10, G01N 1/22

(54) **Mobile Abgasmesseinrichtung**
Mobile exhaust gas measuring device
Dispositif mobile de mesure des gaz d'échappement

(30) Priorität: 13.09.2013 AT 505822013
(43) Veröffentlichungstag der Anmeldung: 18.03.2015
(73) Patentinhaber: AVL List GmbH, 8020 Graz (AT)
(72) Erfinder: Pointner, Volker, 8020 Graz (AT); Schimpl, Thomas, 8430 Leibnitz (AT)
(74) Vertreter: Patentanwälte Pinter & Weiss OG

(56) Entgegenhaltungen:
- EP-A1- 0 567 442
- DE-A1- 19 825 268
- US-B1- 6 470 732

## Beschreibung

Die gegenständliche Erfindung betrifft eine mobile Abgasmesseinrichtung, die an einem Fahrzeug befestigbar ist, mit einer Abgasleitung, an deren erstem Ende eine Entnahmesonde angeordnet ist, die in ein Auspuffendrohr des Fahrzeuges einführbar ist, wobei das zweite Ende der Abgasleitung mit der mobilen Abgasmesseinrichtung verbunden ist.

Bei der stationären Abgasmesstechnik in einer Werkstatt wird häufig eine Entnahmesonde in das Endrohr der Auspuffanlage gesteckt und über die Entnahmesonde Abgas aus dem Endrohr entnommen, das über eine, in der Regel am Boden liegende, Leitung einem Messgerät zugeführt wird.

Bei einer stationären Abgasmesstechnik am Prüfstand, z.B. einem Fahrzeug-, Antriebsstrang- oder Motorprüfstand, wird der Auspuff, meistens über Manschetten, an ein Absaugrohr für die Volumenstrommessung angeschlossen. Beispielsweise ist in der US 6,470,732 B1 dazu eine elastische Manschette vorgesehen, welche mittels Schlauchschellen am Auspuff befestigt wird. Die DE 198 25 268 A1 zeigt ein von Hand verfahrbares Gestell, mittels welchem eine Absaugung am Auspuff positioniert wird. In ganz ähnlicher Weise wird in der EP 0 567 442 A1 eine mittels Wandhalter an einer Wand befestigte Absaugung gezeigt, deren Absaugschlauch mittels eines beweglichen Arms positionierbar ist.

Im Falle von mehrflutigen Auspuffanlagen, z.B. bei zwei Auspuffen, wird der gesamte Abgasstrom aus allen Endrohren über eine Abgaszusammenführung gesammelt und dann an ein Absaugrohr für die Volumenstrommessung angeschlossen. In das Absaugrohr wird eine Entnahmesonde zur Abgasmessung montiert. Über die Entnahmesonde wird Abgas aus dem Absaugrohr entnommen und über eine, in der Regel am Boden liegende, Abgasleitung einem Messgerät zugeführt.

In der mobilen Abgasmesstechnik sollen die Konzentrationen der Abgaskomponenten aus dem Gesamtvolumenstrom der Auspuffanlage des fahrenden Fahrzeuges gemessen werden. Um den hohen Abgastemperaturen und dem korrosiven Charakter des Abgases zu widerstehen, werden für die dafür notwendige Abgasentnahmeeinrichtung häufig rostfreie Stahlrohre verwendet, die am Endrohr des Auspuffs des Fahrzeugs angeschlossen werden, in der Regel mittels Silikonmanschetten und Schlauchklemmen. Ein Beispiel dafür findet sich z.B. in der EP 1 046 025 B1. Bei einer mehrflutigen Auspuffanlage, also z.B. bei einem Doppelauspuff, wird der gesamte Abgasstrom aus allen Endrohren zusammengeführt und die Konzentrationen der Komponenten im Abgasstrom gemessen. Die Messung des gesamten Volumenstromes (des Gesamtvolumenstroms der Auspuffanlage) kann für die Bestimmung einer absoluten Konzentrationsangabe, z.B. in g/kWh oder g/gefahrener Kilometer, notwendig sein. Damit müssen an allen Endrohren Stahlrohre angeordnet werden und diese müssen zur Abgasanalyse zu einem einzigen Rohr und so zu einem Gesamtvolumenstrom zusammengeführt werden, um den gesamten Volumenstrom messen zu können. Das Gewicht der Stahlrohre ist allerdings störend, da dadurch die Messergebnisse verfälscht werden können und unter Umständen kann auch die zulässige Traglast von Teilen des Fahrzeugs überschritten werden, z.B. wenn die mobile Messtechnik an einer Anhängekupplung montiert wird. Daneben kommt es in der Praxis beim Anbringen der Edelstahlrohre an der Auspuffanlage auch häufig zu Beschädigungen am Fahrzeug oder am Auspuff, was unerwünscht ist. Nicht zuletzt ist die Anpassung einer solchen Stahlverrohrung an verschiedene Auspuffgeometrien, Auspuffformen (rund, oval, etc.), Fahrzeuge und Fahrzeugtypen auch immer ein hoher Aufwand und zeitintensiv. Bei Probefahrten wird in der Praxis auch häufig der Auspuff des Fahrzeuges angebohrt und eine Vorrichtung eingeschweißt, in die eine Entnahmesonde geschraubt werden kann, was aber aufgrund der Beschädigung oder Veränderung der Auspuffanlage nachteilig ist. Generell ist es unerwünscht, Teil an der Auspuffanlage anzubringen, um eine sichtbare Beschädigung des Auspuffs, insbesondere des Endrohres, das oftmals verchromt ausgeführt ist, zu vermeiden.

Darüber hinaus dürfen sich während der Fahrt des Fahrzeugs natürlich auch keine Komponenten der Abgasmesstechnik oder einer Abgasentnahmeeinrichtung vom Fahrzeug lösen oder sich lockern, was eine Gefahr für andere Verkehrsteilnehmer darstellen würde oder das Fahrzeug beschädigen könnte.

Für die mobile Abgasmesstechnik wünscht man sich daher eine Abgasentnahmeeinrichtung, die leicht ist, schnell, einfach und sicher montiert werden kann, ohne die Auspuffanlage zu beschädigen, und die den hohen Temperaturen des Abgases und dem Abgas selbst widerstehen kann.

Es ist daher eine Aufgabe der gegenständlichen Erfindung, eine solche Abgasentnahmeeinrichtung für die mobile Abgasmesstechnik anzugeben.

Diese Aufgabe wird erfindungsgemäß dadurch gelöst, dass zumindest ein frei im Raum positionierbarer Gelenkstab mit einem ersten und einem zweiten Ende vorgesehen ist, wobei das erste Ende des Gelenkstabes an einem ortsfesten Bauteil des Fahrzeuges anordenbar ist und das zweite Ende des Gelenkstabes an der Abgasleitung oder der Entnahmesonde angeordnet ist. Bei mehr als einem Auspuffendrohr können natürlich mehrere solcher Gelenkstäbe und daran befestigte Abgasleitungen mit Entnahmesonde, je einer/e für die einzelnen Auspuffendrohre, vorgesehen sein, wobei die Abgasleitungen dann bevorzugt auch zu einem Absaugrohr zusammengeführt sein können. Auf diese Weise wird es möglich, die Entnahmesonde im Auspuffendrohr zu positionieren, ohne dazu am Auspuff selbst etwas zu verändern oder zu befestigen oder diesen dabei zu beschädigen. Darüber hinaus lässt sich die Entnahmesonde auf diese Weise sehr einfach und sicher und unabhängig von der Auspuffgeometrie im Auspuffendrohr positionieren. Gleichfalls kann die Abgasleitung oder die Entnahmesonde dabei einfach aus einem geeigneten leichten und widerstandsfähigen, und auch flexiblen, Material gefertigt werden.

Der Gelenkstab kann einfach auf einem ohnehin vorhandenen, am Fahrzeug anordenbaren Messtechnikträger, auf dem die Abgasmesseinrichtung angeordnet werden kann, befestigt werden, wobei das erste Ende des Gelenkstabes am Messtechnikträger angeordnet ist. Alternativ kann der Gelenkstab (bzw. dessen erstes Ende) an einem Halteteil angeordnet sein, der wiederum an einem ortsfesten Bauteil des Fahrzeugs, insbesondere der Fahrzeugkarosserie oder eines Anbauteils der Fahrzeugkarosserie, wie z.B. einer Stoßstange, befestigt werden kann. Teile der Auspuffanlage sind keine Teile der Fahrzeugkarosserie oder eines Anbauteils der Fahrzeugkarosserie.

In einer Variante der Erfindung sind zumindest zwei Abgasleitungen mit jeweils einer Entnahmesonde vorgesehen und jede der zumindest zwei Abgasleitungen ist mittels eines Gelenkstabes in einem Auspuffendrohr anordenbar und die zumindest zwei Abgasleitungen sind zu einem gemeinsamen Absaugrohr zusammengeführt, das mit zumindest einem Abgasmessgerät verbunden ist.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigen
Fig.1 und Fig.2 den hinteren Teil eines Fahrzeugs mit einer erfindungsgemäßen Abgasentnahmeeinrichtung in verschiedenen Ansichten und
Fig.3 eine alternative Anordnung des Gelenkstabes am Fahrzeug.

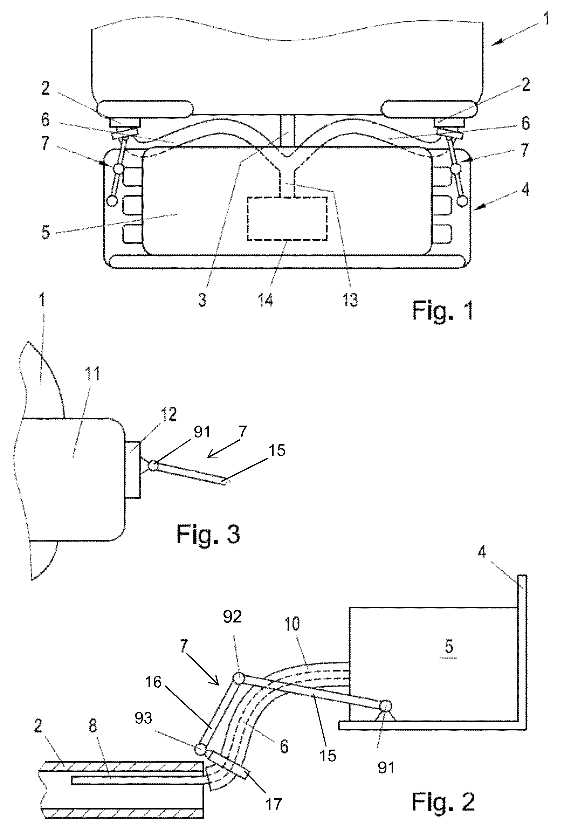

Fig.1 zeigt den hinteren Teil eines Fahrzeugs 1 mit einer Doppelauspuffanlage mit zwei Auspuffendrohren 2 in einer Draufsicht und Fig.2 in einer ausschnittsweisen Seitenansicht. An einer Anhängerkupplung 3 ist hier ein Messtechnikträger 4 montiert, z.B. ein herkömmlicher Fahrradträger oder Gepäckträger, auf dem die mobile Abgasmesseinrichtung 5 mit einem oder mehreren Abgasmessgeräten 14 in einem Gehäuse, oder auch mehreren Gehäusen, angeordnet ist. Zur Abgasmesseinrichtung 5 führt von jedem der beiden Auspuffendrohre 2 jeweils eine, vorzugsweise flexible, Abgasleitung 6, die in der Abgasmesseinrichtung 5 zu einem Absaugrohr 13 zusammengeführt werden, z.B. mittels eines Y- oder T-Stücks (wie in Fig.1 angedeutet). Selbstverständlich kann die Zusammenführung zu einem Absaugrohr auch vor der Abgasmesseinrichtung 5 erfolgen. Hinter der Zusammenführung sind dann, bevorzugt in der Abgasmesseinrichtung 5, am Absaugrohr 13 die benötigten, an sich hinlänglich bekannten und nicht im Detail dargestellten Abgasaufbereitungs- und Abgasmessgeräte 14 angeordnet. Ebenso kann in der Abgasmesseinrichtung 5 eine nicht dargestellte Pumpe, gegebenenfalls auch in Kombination mit Volumenstromregeleinrichtungen, vorgesehen sein, um eine definierte Menge von Abgas durch die Abgasleitung 6, bzw. durch das Absaugrohr 13, zu fördern. Im Falle eines einzigen Auspuffendrohres 2 kann die Abgasleitung 6 direkt mit dem Abgasmessgerät 14 in der Abgasmesseinrichtung 5 verbunden sein.

Die Abgasleitungen 6 und/oder das Absaugrohr 13 können beheizt ausgeführt sein, um eine unerwünschte Abkühlung des Abgases in der Abgasleitung 6 zu vermeiden. Dazu kann die Abgasleitung 6 mit einem Heizmantel 10 (Fig.2) ummantelt und/oder auch thermisch isoliert sein. Die Abgasleitung 6 ist bevorzugt aus einem leichten Material, z.B. aus Polytetrafluorethylen (PTFE) oder aus Perfluoralkoxy-Polymeren (PFA), gegebenenfalls mit zugehöriger Heizung, Schirmung und thermischer Isolierung, gefertigt, das auch widerstandsfähig gegenüber dem Abgas und gegenüber mechanischer Beschädigung von außen ist.

Am von der Abgasmesseinrichtung 5 abgewandten ersten Ende der Abgasleitung 6 ist eine Entnahmesonde 8 vorgesehen, die in das Auspuffendrohr 2 geschoben wird (Fig.2). Als Faustregel gilt, dass die Entnahmesonde 8 mindestens den 6-fachen Durchmesser der Leitung 6 in das Auspuffendrohr 2 geschoben werden sollte.

Durch die Entnahmesonde 8 wird nur ein Teilstrom des gesamten Abgasstromes entnommen und über die Abgasleitung 6 einem Abgasmessgerät 14 in der Abgasmesseinrichtung 5 zugeführt.

Um die Abgasleitung 6 bzw. die Entnahmesonde 8 richtig und ortsfest zu positionieren, ist ein Gelenkstab 7 vorgesehen, der an einem Ende an der Abgasleitung 6 bzw. an der Entnahmesonde 8 und mit einem anderen Ende an einem ortsfesten Bauteil der Fahrzeugkarosserie oder eines Anbauteils der Fahrzeugkarosserie, zu dem auch der Messtechnikträger 4 gehört, befestigt ist. Der Gelenkstab 7 ist mit einer Anzahl von Gelenken 91, 92, 93 ausgeführt und der Gelenkstab 7, oder ein Teil davon, kann im Raum frei positioniert und fixiert werden.

Selbstverständlich ist es auch möglich, eine Abgasleitung 6 mittels mehreren solchen Gelenkstäben 7 zu positionieren, zu halten und zu fixieren.

Allgemein wird im Sinne der Erfindung unter einem Gelenkstab 7 eine Einrichtung mit zumindest einem oder mehreren starren Zwischenteilen 15, 16, die jeweils an ihren Enden Gelenke 91, 92, 93 aufweisen und/oder durch Gelenke 91, 92, 93 miteinander verbunden sind, verstanden. Damit kann ein Gelenkstab 7 einfachster Ausführung aus nur einem starren Zwischenteil bestehen, der an seinem ersten und zweiten Ende je ein Gelenk aufweist, über das er mit dem Fahrzeug (bzw. über den daran ortsfest montierten Messtechnikträger 4) und der Abgasleitung 6 bzw. der Entnahmesonde 8 verbunden ist. Weitere Ausführungsformen sind in den Figuren dargestellt.

Als Gelenk wird eine Vorrichtung verstanden, die eine Relativbewegung zwei miteinander verbundener, starrer Bauteile in einer bestimmten Anzahl von Freiheitsgraden (maximal 5 Freiheitsgraden) ermöglicht. Denkbar sind z.B. Drehgelenkarten, Kugelgelenkarten, Schiebegelenkarten, Führungen (z.B. Längsführungen, Führungen auf Kurvenbahnen, etc.), Lager (z.B. Drehlager, Schiebelager, etc.), usw.

Das Fixieren des Gelenkstabes 7 im Raum kann z.B. über entsprechende Klemm-, Halte- oder Spanneinrichtungen an den Gelenken 91, 92, 93 erfolgen (in den Figuren nicht dargestellt). Der Gelenkstab 7 kann aber auch selbstfixierend sein, z.B. bei entsprechend schwergängigen Gelenken 91, 92, 93.

Im Ausführungsbeispiel nach Fig.1 und 2 ist der Gelenkstab 7 an seinem ersten Ende am Messtechnikträger 4 ortsfest angeordnet, wobei der Messtechnikträger 4 einen ortsfesten Bauteil das Fahrzeugs 1 darstellt.

Dazu ist am Messtechnikträger 4 ein am ersten Ende des Gelenkstabs 7 angeordnetes erstes Gelenk 91, welches beispielsweise als Kugelgelenk ausgebildet ist, befestigt. Das erste Gelenk 91 kann dazu eine entsprechende Aufnahme zur Verbindung mit dem Messtechnikträger 4, beispielsweise mittels Schraubverbindung, aufweisen. Selbstverständlich können auch, wie bereits zuvor im Zusammenhang mit der Gelenkstabfixierung erwähnt, andere Verbindungs- oder Fügevarianten, wie nieten, schweißen, kleben, klemmen und dgl. zur Anwendung kommen. Weiters muss es sich bei dem ersten Gelenk 91 nicht zwangsläufig um ein Kugelgelenk handeln. Wie bereits ausgeführt kommen eine Reihe unterschiedlicher Gelenkarten dafür in Frage.

Mit dem ersten Gelenk 91 ist ein erstes Ende eines ersten starren Zwischenteils 15 verbunden, an dessen zweitem Ende ein zweites Gelenk 92 angeordnet ist. Am zweiten Gelenk 92 ist das erste Ende eines zweiten starren Zwischenteils 16 angeordnet, an dessen zweitem Ende ein drittes Gelenk 9.3 befestigt ist. Zweites 92 und drittes Gelenk 93 können beliebig ausgeführt sein. Das zweite Ende des zweiten starren Zwischenteils 16 mit drittem Gelenk 93 stellt im in Fig. 2 dargestellten Ausführungsbeispiel das zweite Ende des Gelenkstabs 7 dar.

Im Falle des in Fig. 2 dargestellten Beispiels ist am dritten Gelenk 93 weiters ein Aufnahmeelement 17 zur Befestigung von Abgasleitung 6 und - ggf. - Heizmantel 10 am dritten Gelenk 93 angeordnet. Für das Aufnahmeelement 17 kommen unterschiedlichste Befestigungssysteme bekannter Art wie Klemm - oder Schellensysteme in Frage.

Um eine eingenommene Position im Raum zu fixieren, können die Gelenke 91,92, 93 beispielsweise eine entsprechend hohe innere Reibung aufweisen bzw. wie bereits erwähnt entsprechend schwergängig ausgeführt sein. Natürlich können an den Gelenken 91, 92, 93 auch entsprechende Klemm- oder Fixiereinrichtungen vorgesehen sein, die es erlauben zumindest einen oder auch alle Freiheitsgrade des entsprechenden Gelenks 91, 92, 93 zu sperren.

Ein Gelenkstab 7 mit drei Gelenken 91, 92, 93 und zwei starren Zwischenteilen 15 und 16 gemäß beschriebenem Ausführungsbeispiel ist nur eine von vielen möglichen Ausführungsvarianten.

In einer Variante der Erfindung werden der Gelenkstab 7 bzw. das erste Gelenk 91 an einem Halteteil 12, z.B. ein Saugnapf, angeordnet, der dann an einem anderen Fahrzeugteil, wie z.B. der Fahrzeugkarosserie oder der Stoßstange 11 befestigt wird, wie in Fig.3 angedeutet. Das kann beispielsweise dann notwendig oder vorteilhaft sein, wenn die Abgasmesseinrichtung 5 im Fahrzeug 1, z.B. im Kofferraum, untergebracht wird und kein externer Messtechnikträger 4 benötigt wird.

Auf diese Weise kann der Gelenkstab 7 und die daran angeordnete Abgasleitung 6 bzw. Entnahmesonde 8 flexibel und nahezu beliebig im Raum (im Rahmen des Bewegungsspielraumes des Gelenkstabes 7) positioniert und ortsfest fixiert werden. Dabei wird die Abgasleitung 6 bevorzugt so positioniert, dass diese nicht direkt oder vollständig in den Abgasstrahl ragt, wie in Fig.2 angedeutet.

Die obigen Ausführungen gelten natürlich gleichermaßen auch für eine Auspuffanlage mit nur einem Auspuffendrohr 2 oder mit mehr als zwei Auspuffendrohren 2, wobei Abgas nicht zwingend von allen Auspuffendrohren 2 entnommen werden muss.

Nachdem die geometrische Lage des Auspuffendrohres 2 für ein Fahrzeug 1 bekannt sind bzw. vermessen werden kann, kann der Messtechnikträger 4 mit Gelenkstab 7 und daran befestigter Abgasleitung 6 auch schon vorab montiert und positioniert werden. Das gilt natürlich gleichermaßen auch bei mehr als einem Auspuffendrohr 2 und mehr als einem Gelenkstab 7. Das ermöglicht eine besonders einfache Montage der Abgasmesseinrichtung 5 mit der Abgasentnahmeeinrichtung am Fahrzeug 1, da diese dann nur mehr an der zugehörigen Vorrichtung, z.B. der Anhängerkupplung 3, befestigt werden muss. Das würde auch die Verwendung von nicht flexiblen oder nur gering flexiblen Abgasleitungen 6 ermöglichen.

Wird für die Abgasmesseinrichtung 5, bzw. die darin vorgenommene Abgasanalyse, der Gesamtvolumenstrom des Abgases benötigt, kann dieser anhand des entnommenen Teilstroms auch rechnerisch ermittelt werden, z.B. aus Kraftstoff- und Luftverbrauch ermittelt aus dem Motorsteuergerät und einer gemessenen Kohlendioxid (CO₂)-, Kohlenmonoxid (CO)- und/oder Kohlenwasserstoff (HC)-Konzentration im Abgas, wie z.B. aus der "Regulation No. 49 of the Economic Commission for Europe of the United Nations (UN/ECE) - Uniform provisions concerning the measures to be taken against the emission of gaseous and particulate pollutants from compression-ignition engines and positive ignition engines for use in vehicles" bekannt ist.

## Patentansprüche

1. Mobile Abgasmesseinrichtung (5), mit einem oder mehreren Abgasmessgeräten (14) wobei die mobile Abgasmesseinrichtung (5) an einem Fahrzeug (1) befestigbar ist, und eine Abgasleitung (6) aufweist, an deren erstem Ende eine Entnahmesonde (8) angeordnet ist, die in ein Auspuffendrohr (2) des Fahrzeuges (1) einführbar ist, wobei das zweite Ende der Abgasleitung (6) mit dem einen oder mehreren Abgasmessgeräten (14) der mobilen Abgasmesseinrichtung (5) verbunden ist, **dadurch gekennzeichnet, dass** die mobile Abgasmesseinrichtung (5) zumindest einen, frei im Raum positionierbaren Gelenkstab (7) mit einem ersten und einem zweiten Ende aufweist, wobei das erste Ende des Gelenkstabes (7) an einem ortsfesten Bauteil des Fahrzeuges (1) anordenbar ist und das zweite Ende des Gelenkstabes (7) an der Abgasleitung (6) oder der Entnahmesonde (8) angeordnet ist.

2. Mobile Abgasmesseinrichtung (5) nach Anspruch 1, **dadurch gekennzeichnet, dass** ein am Fahrzeug (1) anordenbarer Messtechnikträger (4), auf dem die mobile Abgasmesseinrichtung (5) angeordnet ist, vorgesehen ist und das erste Ende des Gelenkstabes (7) am Messtechnikträger (4) anordenbar ist.

3. Mobile Abgasmesseinrichtung (5) nach Anspruch 1, **dadurch gekennzeichnet, dass** das erste Ende des Gelenkstabes (7) an einem Halteteil (12) angeordnet ist, der an einem ortsfesten Bauteil des Fahrzeuges (1) befestigbar ist.

4. Mobile Abgasmesseinrichtung (5) nach einem der Ansprüche 1 bis 3, **dadurch gekennzeichnet, dass** zumindest zwei Abgasleitungen (6) mit jeweils einer Entnahmesonde (8) vorgesehen sind und jede der zumindest zwei Abgasleitungen (6) mittels eines Gelenkstabes (7) in einem Auspuffendrohr (2) anordenbar ist und die zumindest zwei Abgasleitungen (6) zu einem gemeinsamen Absaugrohr (13) zusammengeführt sind, das mit zumindest einem Abgasmessgerät (14) verbunden ist.

## Claims

1. A mobile exhaust gas measuring equipment (5), having one or more exhaust gas measuring devices(14), wherein the mobile exhaust gas measuring equipment (5) is mountable on a vehicle (1) and has an exhaust gas line (6), at the first end of which a sampling probe (8) is arranged, which is insertable into an exhaust tailpipe (2) of the vehicle (1), wherein the second end of the exhaust gas line (6) is connected to the one or more exhaust gas measuring devices (14) of the mobile exhaust gas measuring equipment (5), **characterized in that** the mobile exhaust gas measuring equipment (5) has at least one articulated rod (7), which is freely positionable in space, having a first end and a second end, wherein the first end of the articulated rod (7) can be arranged on a fixed component of the vehicle (1) and the second end of the articulated rod (7) is arranged on the exhaust gas line (6) or the sampling probe (8).

2. The mobile exhaust gas measuring equipment (5) according to Claim 1, **characterized in that** a measuring equipment carrier (4), which can be arranged on the vehicle (1), is provided, on which the mobile exhaust gas measuring equipment (5) is arranged, and the first end of the articulated rod (7) can be arranged on the measuring equipment carrier (4).

3. The mobile exhaust gas measuring equipment (5) according to Claim 1, **characterized in that** the first end of the articulated rod (7) is arranged on a holding part (12), which is mountable on a fixed component of the vehicle (1).

4. The mobile exhaust gas measuring equipment (5) according to any one of Claims 1 to 3, **characterized in that** at least two exhaust gas lines (6), each having a sampling probe (8), are provided, and each of the at least two exhaust gas lines (6) can be arranged by means of an articulated rod (7) in an exhaust tailpipe (2), and the at least two exhaust gas lines (6) are joined together to form a shared suction pipe (13), which is connected to at least one exhaust gas measuring device (14).

## Revendications

1. Dispositif mobile de mesure de gaz d'échappement (5), comprenant un ou plusieurs appareils de mesure de gaz d'échappement (14), le dispositif mobile de mesure de gaz d'échappement (5) pouvant être fixé sur un véhicule (1) et présentant une conduite de gaz d'échappement (6), à la première extrémité de laquelle est agencée une sonde de prélèvement (8) apte à être insérée dans un tuyau d'extrémité de pot d'échappement (2) du véhicule (1), la deuxième extrémité de la conduite de gaz d'échappement (6) étant reliée à un ou plusieurs appareils de mesure de gaz d'échappement (14) du dispositif mobile de mesure de gaz d'échappement (5), **caractérisé en ce que** le dispositif mobile de mesure de gaz d'échappement (5) présente au moins une tige d'articulation (7) apte à être positionnée librement dans l'espace, avec une première et une deuxième extrémité, la première extrémité de la tige d'articulation (7) pouvant être disposée sur une pièce fixe du véhicule (1), et la deuxième extrémité de la tige d'articulation (7) étant disposée sur la conduite de gaz d'échappement (6) ou sur la sonde de prélèvement (8).

2. Dispositif mobile de mesure de gaz d'échappement (5) selon la revendication 1, **caractérisé en ce qu'**il est prévu un support de technique de mesure (4) apte à être agencé sur le véhicule (1), sur lequel est agencé le dispositif mobile de mesure de gaz d'échappement (5), et **en ce que** la première extrémité de la tige d'articulation (7) peut être agencée sur le support de technique de mesure (4).

3. Dispositif mobile de mesure de gaz d'échappement (5) selon la revendication 1, **caractérisé en ce que** la première extrémité de la tige d'articulation (7) est agencée sur une pièce de maintien (12) apte à être fixée sur une pièce fixe du véhicule (1).

4. Dispositif mobile de mesure de gaz d'échappement (5) selon l'une des revendications 1 à 3, **caractérisé en ce qu'**il est prévu au moins deux conduites de gaz d'échappement (6) comprenant respectivement une sonde de prélèvement (8), et **en ce que** chacune des au moins deux conduites de gaz d'échappement (6) peut être agencée dans un tuyau d'extrémité de pot d'échappement (2) à l'aide d'un tige d'articulation (7), et **en ce que** les au moins deux conduites de gaz d'échappement (6) sont réunies en un tuyau d'aspiration commun (13) raccordé à au moins un appareil de mesure de gaz d'échappement (14).
